# EUROPEAN PATENT APPLICATION

(11) **EP 4 544 914 A1**
(43) Date of publication of application: **30.04.2025**
(21) Application number: 24206880.7
(22) Date of filing: 16.10.2024
(51) Int. Cl.: A21D 2/36, A21D 2/38, A21D 13/047, A21D 13/06, A23L 7/109, A23L 33/105, A23L 33/125

(54) **FOOD PREPARATION FOR PRODUCING PASTA AND BACKED FOODS HAVING LOW GLYCEMIC INDEX AND HIGH PROTEIN SUPPLY**

(30) Priority: 23.10.2023 IT 202300022107
(71) Applicant: Lozio, Federico, 20875 Burago di Molgora (MB) (IT)
(72) Inventor: Lozio, Federico, 20875 Burago di Molgora (MB) (IT)
(74) Representative: Giugni, Diego

(57) **Abstract**

The present invention relates to a food preparation for pasta and baked food products with low glycaemic index and high protein intake. In particular, the invention relates to a preparation comprising a mixture of three flour-types selected in specific amounts so as to allow the production of products with excellent nutritional and organoleptic qualities.

## Description

### TECHNICAL FIELD OF THE INVENTION

The present invention relates to the field of foodstuffs for human consumption and it is characterised in that it proposes in the day to day human diet a food product with low glycaemic index, with high protein intake, easy to digest and myorelaxant/hypotensive effect, therefore being particularly recommended in diets for sportsmen and sportswomen, the elderly and people pursuing food products that may contribute to the improvement of the quality of life also considered as the contribution to an easier control of body weight, and of the population which opts for vegan diets by cultural choice and dietary need.

### STATE OF THE PRIOR ART

In the food industry, various preparations of products dedicated to populations sensitive to gluten, glucose, etc., characterised by poor appetibility, excessive refining and/or specialisation, have long been known. At the moment, there is no evidence of any product available on the market that simultaneously combines food, nutritional, organoleptic, palatability, appetibility and ease of industrialisation characteristics. Not less important is the fact that the prior art products often do not suit the entire family, therefore children included.

In particular, there are known various types of pasta, including those with whole wheat, those made up of legume flour, rice/Kamut flour etc., or pasta added with nutritional dietary supplements, for example with Spirulina algae etc. Generally, all these preparations aim at improving the nutritional intake and decrease in the amount of carbohydrates introduced with the meal.

The main problems of such products are:
- consistency at times not compact, which flakes apart upon cooking;
- often unpleasant palatability;
- taste unsuitable to replace the conventional taste of pasta to which the user is accustomed;
- mixing with other refined flour-types which rarely combine effectively and directly to improve health conditions.

The document "Organic Spiral Pasta with Hemp" published in the INTERNET, GNPD database under accession number 5081121 describes a pasta which contains durum-wheat meal and 8% of hemp flour. There is not specified any starting preparation to produce such pasta. The pasta is rich in proteins and vitamins. Despite this, the meal content combined with hemp does not guarantee the right balancing of taste and glycaemic index.

Document IT TO20150 130 A1 discloses a preparation for producing a pasta, comprising at least 50% of common wheat flour, 10% decorticated hemp seeds, at least one of the matcha green tea, grape and olive seed polyphenols in amounts not less than 0.35%. Despite being balanced from a nutritional point of view, such pasta is unpleasant due to combination of common wheat, hemp and green tea.

The document "Chestnut Coquillete Pasta" published in the INTERNET, GNPD database under accession number 10939434 discloses a pasta containing semi-whole durum-wheat meal and chestnut flour 15%. This pasta is not very pleasant to taste because the sweety of chestnut flour is not balanced by the meal.

Document DE 20 2022 101688 U1 discloses a baking dough prepared from a mixture comprising from 15% to 25 % of chestnut flour, possibly with addition of linseed flour and linseed in amounts comprised between 5 and 25%, hemp flour in amounts comprised between 8 and 18%, ground psyllium husks in amounts comprised between 4 and 24%. Despite being gluten-free and digestible, such mixture does not maintain the typical taste of the conventional pasta due to the total absence of wheat.

The document "Wheat Germ Plus" published in the INTERNET, GNPD databases under accession number 4751825 discloses a preparation of 11 ingredients for producing dishes of various types such as muesli, yoghurt, fruit salads, soups, decorations. The preparation is clearly not suitable for producing doughs.

### SUMMARY OF THE INVENTION

Therefore, the technical problem underlying the present invention lies in obtaining a preparation aimed at producing pasta and baked food products in general, aimed at improving the problems resulting from the use of conventional flour and relevant products of the prior art.

Such problem is overcome by a preparation of mixture of particular flour-types selected in specific amounts.

Therefore, a first object of the present invention is a preparation of a mixture of flours containing calibrated amounts of different types of flours.

A second object is to provide a preparation for a mixture of baked food products or pasta provided with excellent resistance to the conventional preparations and cooking.

A third object is a preparation for a mixture capable of maintaining organoleptic properties and in particular excellent flavour and palatability to the end product.

A further object is an end product deriving from such mixture which promotes excellent digestibility, low glycaemic index and, above all, that is suitable for any type of diet.

A yet further object is a method for maintaining the ideal weight of a healthy person comprising the intake of the products obtained with the food preparation of the invention.

Further characteristics and advantages of the preparation of the invention will become more apparent from the following description of some embodiments provided purely by way of non-limiting example.

### DETAILED DESCRIPTION OF THE INVENTION

The idea underlying the present invention is to provide a specific preparation, that is a food preparation or mixture of different conventional flour-types without adding chemical additives and/or preservatives, capable of providing a product suitable for the nutrition of all and that provides an appropriate nutritional intake, while maintaining the nutritional and organoleptic characteristics typical of selected flours without alterations.

In the described preparation, such product is appropriate for the nutrition of type II diabetes (non-insulin-dependent diabetes mellitus) patients, "gluten-intolerant" patients and overweight patient, sportsman/sportswoman, the elderly and vegans. All this while maintaining the dining pleasure and the Italian tradition of the Mediterranean diet.

This objective is achieved by the precise preparation and by the identification of the right proportions in the mixture, which combines the various types of flour, organic or non-organic, coming from Italy, which, in their particular preparation, enable to obtain the end product with the characteristics of: product that is aesthetically excellent, palatable in terms of taste and consistency, highly digestible, with low glycaemic index and high nutritional power and protein intake; furthermore, the product facilitates the improvement bowel transit, it is suitable for NCGS (non-celiac gluten sensitivity), the diabetic person, obese person, vegan person, and generally the whole family, children and the elderly included.

Therefore, after numerous attempts, various technical tests carried out in production and test that would enable to achieve the right mixing and identify the correct tolerances in the percentages of the individual flours which meet the requirements mentioned above, the food preparation according to the present invention comprises by weight on the total dry weight of the preparation 13-18% of chestnut flour, 20-30% of hemp flour and 48-72% of Senatore Cappelli durum wheat flour. Preferably, the formulation comprises 14-17% of chestnut flour, 22-28% of hemp flour and 55-65% of Senatore Cappelli durum wheat flour.

Depending on the different uses, the preparation may comprise other substances in solid or liquid form, for example selected from among flavour enhancement agents, thickeners, stabilisers, leavening agents, salt, egg derivatives and proteins and/or milk derivatives and proteins in amounts used conventionally depending on the specific product intended to be obtained.

The expressions flavour enhancement agents, thickeners, stabilisers, leavening agents shall be understood for example as defined by the Italian National Institute of Health (https://www.issalute.it/index.php/la-salute-dalla-a-alla-z-menu/a/additivi-alimentari) or by the European Food Safety Authority (https://www.efsa.europa.eu/it/topics/topic/food-additives). Similarly, the expressions milk and egg derivatives are well-known for example in the catering industry (https://ristorazionebar.it/uova_latte_derivati/).

In particular, the preparation is such to comprise out of 100 grams by weight of total dry 50-80 gr of carbohydrates, 6-10 gr of fibres and 12-19 gr of proteins, preferably 60-70 gr of carbohydrates, 7-9 gr of fibres and 14-17 gr of proteins.

The repeated tests on various mixtures of flours, on the grinding and extrusion processes have enabled to identify the precise preparation that ensures consistency in the food and nutritional values in the various food applications (sweet and savoury products). Various tests were carried out with different percentages of mixed flours in aimed at determining the ideal composition. In particular, the tests aimed at determining the composition % that ensures resistance to cooking, palatability and limitation of unpleasant sensations after meals: swelling, distended abdomen, drowsiness, high blood sugar values. The technical tests were carried out with different percentages of mixed flours comparing them with the values obtained only starting from Senatore Cappelli flour, and progressively added with hemp flour and chestnut flour subsequently.

The mixture of the three flours described above, coming from a conventional work process and in the precise preparation, enabled to ascertain, after experiments and tests carried out, that the food products prepared according to the preparation proposed in the present patent application confers to the food products derived therefrom: low glycaemic index, satiating power, high tolerance even in subjects suffering from gluten sensitivity, improvement of the functioning of the intestinal tract, excellent palatability, ease of digestibility, high fibre and protein content, high vitamin and mineral content, as well as improvement of the subjective well-being condition.

For example, there was prepared a pasta with a mixture by weight on the total weight of the mixture, 10% of chestnut flour, 15% of hemp flour and 75% of Senatore Cappelli durum wheat flour. This mixture was processed according to standard methods for producing pasta in various formats. Once cooked, the pasta showed poor resistance to cooking and easy chalking. Furthermore, the treated subjects showed a higher morning blood sugar response and postprandial drowsiness. Therefore, attempts were made to change the percentage ratio, that is increase of the percentage of hemp flour by 20% with respect to the amounts mentioned above. However, when processing and/or consuming there were observed problems relating to the taste that is nasty and unpleasant to the palate, therefore not appropriate for a wide and long-term consumption. It was ascertained that upon reducing the percentage of Senatore Cappelli flour by 33% and increasing the others by the same proportion (that is 40% Cappelli, 35% hemp and 25% chestnut), there is obtained a product that no longer maintains its palatability characteristics. Furthermore, increasing hemp flour makes the product excessively nasty, which therefore makes it lose all its organoleptic characteristics becoming highly unpleasant; also upon increasing chestnut flour, upon cooking it releases notes that still tend to nasty and therefore contribute together with hemp to make the product unpleasant to taste.

Consistency represents a further problem given that reducing Senatore Cappelli wheat results in product consistency, elasticity and compactness issues. In addition, the adhesiveness of the pasta deteriorates due to the excessive presence of proteins to the detriment carbohydrates. Lastly, also the scent deteriorates and the nasty notes are markedly accentuated.

In conclusion, it can be stated that the maximum acceptable range for a product that effectively and excellently maintains the nutritional, food, organoleptic, palatability, edibility and health values, as shown in the examples, of the formula is comprised in the values mentioned above for each component thereof.

Thanks to such specific combination of percentages of three flours, it was observed that the resulting pasta maintained, if not increased, the organoleptic and nutritional characteristics described above. Furthermore, there was observed a sort of synergistic effect of the properties mainly due to the particular ratio between the three flours in the mixture. As a matter of fact, in any manner and without being bound to any theory, it appears that the active ingredients of each flour, indicated below, are enhanced and maintained even after cooking only within the ratios and concentrations mentioned above.

In addition, it surprisingly appears that the substances of the individual flours in the specified percentages cooperate when mixing and cooking in providing an excellent "texture", therefore avoiding all the aforementioned problems in mixtures obtained using flours and flour mixtures of the prior art.

In particular, chestnut flour contains lipids in slightly higher percentage compared to cereal flours (approximately 3% against approximately 2%), proteins in much lower percentages compared to the other flours, being only 6% while maintaining good stability and also being able to support leavening processes, 73% of carbohydrates mainly in the form of starch, including gr 23.6 of bioavailable sugars (but the choice of such flour is due to the greater digestibility and assimilability, therefore appropriate for nutrition for example for sportsman/sportswoman and the elderly), 9.6% of fibres, minerals including iron, calcium, potassium, zinc, magnesium, phosphorous and sodium, vitamins including B1, B2, B3, folates. In particular, by average, for every 100gr of flour there are: 3.2 mg of iron, 50 mg of calcium, 847 mg of potassium, 0.90 mg of zinc, 62 mg of magnesium, 164 mg of phosphorous, 0.01 mg of sodium, 0.23 mg of Vit b1 (thiamine), 0.37 mg vit b2 (riboflavin), 1 mg of niacin (vit B3), 215 mcg of folates.

Furthermore, the glycaemic index of the chestnut flour 65 IG and each 100 gr approximately provides 343 Kcal (kilocalories equivalent to 1437 Kj).

Hemp flour is gluten-free, it is a special foodstuff due to its ultra-high nutritional value, and it can actually be considered to be a natural dietary supplement for fibres and minerals such as magnesium, potassium, zinc and iron. Furthermore, it should be observed that all these minerals and the vitamins found therein are easy to assimilate and of high quality. The high presence of fibres, low calorie intake (it actually contains more than 20% of calories less compared to conventional flours), the low glycaemic index, make the products made with these flours suitable (compared to more conventional flours) to be often used for cooking, and they are perfect dietary habit for people affected by diabetes, or insulin resistance, who should therefore avoid blood sugar peaks. Furthermore, hemp is rich in vegetable proteins and therefore ideal for those who opt to follow a protein diet for health reasons or for sports purposes, and for people who want to maintain a healthy weight or lose weight. Still to combat the increase in blood sugar level in blood, another element found in hemp flour is rather useful: that is gamma-linolenic acid which also helps to limit an uncomfortable problem related to diabetes, that is numb limbs.

The average nutrients per 100gr of hemp flour can be summarised as follows: 350 calories; glycaemic index 22, 28% of proteins, 50% of carbohydrates, 9% of fats, micronutrients (calcium, magnesium, potassium) 900 mg, iron and zinc, vit. E, polyunsaturated fatty acids (omega 3, omega 6, gamma-linoleic acid) 7.5%, 18% of fibre and water. Hemp flour is obtained from male seeds of cannabis sativa and it confers to the foodstuffs a slight hazelnut-like taste loved by vegans and vegetarians, and free of THC. All active elements contained therein determine a direct action on the control of blood sugar. Hemp flour contains: all 8 essential amino acids, fibres, vitamin E which, acting as an antioxidant, performs a significant function against cellular ageing, promoting the regeneration of tissues and strengthening of immune defences.

The presence of fibres showed positive effects on intestinal well-being, and the presence of Omega 3 and 6 from plant source, two fatty acids that are particularly important for health, assist in preventing the onset of cardiovascular disorders. Similarly, there is a high percentage of gamma-linolenic acid that appears to help reduce pre-menstrual syndrome and the negative effects of menopause, as well as some typical diabetes symptoms such as limb numbness. The glycaemic index of hemp flour is 22 GI.

In conclusion, hemp flour is advantageously gluten-free and is easily assimilated compared to conventional flours. In addition, thanks to its digestive and metabolic characteristics, it is very suitable for overweight people, sportsmen and sportswomen as well as people involved in intense physical exercise. It is also an excellent source of nutrients for vegetarians and vegans, it is an excellent dietary supplement for diabetics and people suffering from pre-menstrual syndromes and menopause, it promotes cardiovascular health and it is well suited for the preparation of sweet and savoury baked food products.

Senatore Cappelli durum wheat flour is the Italian durum wheat flour par excellence. It is a variety of durum wheat typical of Apulia, a cultivar not genetically or chemically treated and derived from organic farming. First and foremost, this durum wheat contains 10% by weight of gluten compared to 18% of modern wheat, plus flavonoids and antioxidants. The average nutritional values per 100g of the product are: energy value 321.00Kcal/1354.00Kj; total fats 2.5g including saturated fats 0.6g; carbohydrates 68.5g including sugars 3.2g; fibre 4.0g; proteins 13.00g; salt 0.01g, micronutrients comprising vitamin E, vitamin 8 complex, pantothenic acid (of vitamin B5) and folic acid, beta-carotene, iron, magnesium, calcium, iodine, selenium.

Senatore Cappelli durum wheat is a variety of wheat that is easily recognised because the plant is very tall. Actually, it rises up to 180 cm, and ends with a particular black moustache. Generally it does not require excessive fertilization and can be grown organically, as the reported height of the seedlings spontaneously suffocates weeds. Other important characteristics are the presence of ultra-deep roots, weed resistance, and its ability to draw nourishment from the deepest layers of the soil, where nutrients are more abundant. The flour obtained from Senatore Cappelli durum wheat is very light-coloured, has a high digestibility, has a glycaemic index (GI) of 40. Thanks to the stone grinding, this wheat preserves the germ of the wheat, the noble part of the seed, keeping its properties intact.

Senatore Cappelli durum wheat is also more digestible and helps to reduce intestinal inflammation. The amount of protein and sugar is also lower than in modern wheat. Finally, its characteristics are also beneficial to the more aromatic and persistent taste.

Patients reported lower values on overall symptoms after eating pasta made with Senatore Cappelli wheat compared to standard pasta. In addition, patient also reported significantly lower values for several gastrointestinal and extra-intestinal symptoms, in particular, swelling, distended abdomen, eructation, flatulence, feeling of incomplete evacuation, dermatitis and numbness in the limbs.

Furthermore, Senatore Cappelli durum wheat is also an ecological choice because it is well suited to dry soils, much more common in this age of climate change and the need for less water consumption. In addition, it is tall and spontaneously suffocates weeds, with less need for herbicides and pesticides.

Senatore Cappelli durum wheat is rich in fibres that increase the feeling of satiety, promote bowel transit, help intestinal bacterial flora, reduce the absorption of fats and cholesterol, reduce the absorption of carcinogens, therefore reducing the risk of developing certain types of cancer.

The mixture according to the present invention can be used to produce various forms of dry or fresh pasta, such as fusilli, paccheri, ditalini, spaghetti, and linguine, as well as both sweet and savoury baked food products such as breadsticks, crackers, rusks, muffins, sponge cake, shortcrust pastry, toast or sandwich bread, as well as pizza dough. With baked food products, the preparation is added with ingredients such as "lievito madre" (sourdough starter) by percentage of 5g per kilogram of dough and left to rise for at least 24 hours.

The product can be easily industrialised and it can be processed according to well-known production methods for bakery products and pasta, in order to ensure, if not increase, the maintenance of all the inherent properties of the raw materials used and to allow the product to acquire adequate consistency.

Generally, the formulation mentioned above is mixed with water in appropriate amounts depending on the product to be obtained, in a conventional mixer such as for example a planetary or spiral mixer. Upon obtaining the dough, it is poured into a pasta extruder should one intend to make pasta. The extruder will be of the conventional type and will end with an extrusion die preferably made of bronze.

Alternatively, the dough may be left to stand with the addition of yeast for products to be leavened, such as bakery and confectionery products, with the addition of further ingredients like the ones described above.

The last step provides for drying after extrusion in conventional air dryers or cooking in special ovens should the products be typical sweet or savoury bakery products.

In any case, the processing steps mentioned above are fully conventional and will therefore not be specified further.

A further object of the invention is a method for maintaining the ideal weight of a healthy person comprising the daily intake of foodstuffs based on the preparation as described above. In particular, the intake provides for baked foods in amounts comprised between 50 g and 100 g per day, depending on the individual, that is man, woman and general physical condition that takes into account the ideal weight. The ideal weight can be calculated in accordance with conventional and well-known methods such as Broca formula, Wan der Vael formula, Berthean formula, and many others. Furthermore, the ideal weight can be extracted from the Body mass index (BMI) (https://www.salute.gov.it/portale/nutrizione/dettagliolMCNutrizione.jsp?lingua=italiano&i d=5479&area=nutrizione&menu=vuoto). In particular, a BMI comprised between 18.5 and 24.9" is considered normal weight. BMI is a reference indicator for epidemiological and screening studies for obesity and is a biometric data expressed as the ratio of weight to square height.

Described below are some embodiments of food products based on the mixture of the invention, as well as clinical results obtained on individuals who consumed the products obtained with the present mixture as a substitute for products obtained with conventional mixtures.

### EXAMPLE 1 - dried pasta

The mixture of the invention consists of 14 % chestnut flour, 28 % hemp flour and 58 % Senatore Cappelli durum wheat flour and it is combined exclusively with water. After 30 minutes, it is extruded using only bronze dies, after which it undergoes a drying process at temperatures not exceeding 36 degrees for a period of time of 48 hours. In this manner, the properties of the mixture maintain all their characteristics.

### EXAMPLE 2 - Bakery products

On the other hand, with regard to producing bakery products, the mixture comprises 13% of chestnut flour, 24% of hemp flour and 58% Senatore Cappelli durum wheat flour. The durum wheat flour first undergoes a regrinding process only as regards the Senatore Cappelli flour which is reground to be easier to process and is always added with water and a percentage of 5% dry "lievito madre" (sourdough starter) with respect to the total weight of the mixture, the leavening process lasts 48 hours. This ensures that the leavening process is completely exhausted and the dough is easier to digest. At the end of the dough leavening and standing step, the dough is baked at temperatures comprised between 160 and 220 degrees centigrade depending on the type of processing: lower for sweet bakery products, higher for bread and pizza.

### EXAMPLE 3 - Sponge cake

On the other hand, with regard to producing bakery products by adding eggs such as Sponge cake, the mixture comprises 16% of chestnut flour, 24% of hemp flour and 58% Senatore Cappelli durum wheat flour. The durum wheat flour undergoes initially a regrinding process, but only as regards the Senator Cappelli flour which is reground so as to be easier to process, and eggs, a vanilla bean and a pinch of salt are added. At the end of the dough processing and standing step, the dough is baked at temperatures comprised between 160 and 180 degrees.

### CLINICAL RESULTS

### EXAMPLE 1

A 71-year-old person with long-standing type II diabetes who was treated with metformin and new oral hypoglycaemics agents, but no longer compensated in the last year, in which fasting glycaemia ranged between 180 and 230 and with glycated haemoglobin >8 (poorly compensated diabetes index), as well as overweight, with visceral fat, snoring and nocturnal apnoea. This individual was given pasta obtained according to example 1 in amounts of approximately 70 grams per day over a period of 2 months. At the end of the intake period, there was observed a decrease of about 4 kg by weight, with a decrease in abdominal fat in particular, very reduced snoring (mild and episodic), no nocturnal apnoea, improvement in fasting glucose values (135 -140). Postprandial blood sugar values test was conducted on the individual (60 mins after eating) recording values around 160/180; the individual in question was also subjected to a postprandial blood sugar test after taking the same amount of pasta by weight based on only Senatore Cappelli flour and there were observed blood sugar values approximately ranging between 220 and 230 by average at 60 mins.

### EXAMPLE 2

An overweight 57 year-old subject with visceral fat, hyperinsulinism (fasting insulinemia 26 postprandial, after 30' 206, after 60' 397) was treated. This individual was given pasta obtained according to example 1 in amounts of 70g per day, for a period of time of 3 months. At the end of the three months, the recorded insulinemia values are: fasting 12, after 30' 103, after 60' 224. In addition, there was recorded a weight loss of about 8 kg and greater mental clarity, improved concentration and focus, greater energy.

### EXAMPLE 3

A 67-year-old individual suffering from chronic fatigue, irritable bowel syndrome and stubborn constipation was recommended to take the pasta in question, which was obtained according to example 1 in amounts of 70 g per day, for a period of time of 3 months with a daily frequency. At the end of the intake, the patient reported a marked improvement in intestinal regularity and improvement in colic pain.

### EXAMPLE 4

A 70-year-old individual suffering from obesity, hyperinsulinism, chronic fatigue, continuous gastralgia using anti-acid (gaviscon^{®}) sachets 3 times a day was given pasta according to example 1 in a amounts of 70 g per day for a period of time of 3 weeks. At the end of the period, there was recorded a drop of 3 kg, no more use of anti-acid.

### EXAMPLE 5

An 82-year-old individual suffering from liver cancer, headache, sleep disturbed by early and frequent awakening, dyspepsia with belching and inappetence and resulting difficulty in feeding, was given pasta obtained according to example 1 in amounts of 70 g per day, for a period of time of 2 months at intervals. At the end of the intake, there was observed a marked improvement in dyspepsia, the individual can feed regularly, there was an improvement in the quality of sleep without waking up during the night, no more belching, no more headache, overall improvement in energy and mood.

### EXAMPLE 6

A 45-year-old individual suffering from metabolic syndrome with hyperinsulinism, abdominal fat, with waist-to-hip ratio 1, irregular bowel, was given pasta according to example 1 in a amounts of 70 g per day for a period of time of three weeks. At the end of the intake, there was observed a weight decrease of 2 kg with an increase in lean mass and an improvement in the waist-to-hip ratio.

### EXAMPLE 7

A 66-year-old individual, suffering from asthenia and inappetence was given pasta obtained according to example 1 in amounts of 70g per day, for a period of time of 2 months. At the end of the observation period, there was an improvement in mood tone and greater energy, as well as a high appreciation of the product consumed.

In particular, it should be noted that, surprisingly, the use of the pasta obtained with this mixture led to an induction of a condition of mental well-being, that is a behavioural improvement with a more peaceful attitude. This effect may be due to the presence in hemp of a substance called "kynurenine", a precursor of vitamin B3 (niacin) and another called "picolinic acid", a niacin isomer. Niacin is the vitamin that allows GABA (gamma-aminobutyric acid) to pass through the blood-brain barrier. GABA is the main inhibitory neurotransmitter of the central nervous system, responsible for regulating neuronal excitability throughout the nervous system. Picolinic acid is important as it transports minerals such as chromium, zinc, manganese, copper, cobalt, iron and molybdenum.

Chromium plays an important role in increasing serotonin and melatonin levels that help regulate wake sleep rhythm, emotions and mood.

On the other hand, the cobalt-manganese combination is recommended for anxiety conditions which promote the onset of mood swings.

Zinc, in particular, if deficient is strongly linked to an increased risk of depression and the severity of depressive symptoms. This mineral is very present in hemp flour.

Zinc-copper combination is used to combat fatigue and depression.

GABA receptors, especially at central level, are the target of all benzodiazepines that have tranquilising and anxiolytic effects as well as inducing sleep.

GABA, the main neurotransmitter inhibiting central nervous system hyperexcitability, intervenes in the regulation of neuronal excitability and it is derived from the decarboxylation of glutamate, an amino acid found in hemp, by GAD (glutamate decarboxylase). In hemp, glutamate is the most common amino acid and it ranges between 16.7% and 17.7% depending on the type of plant, but it is always the most expressed.

The sedative anxiolytic tranquiliser effect may therefore be due to the endogenous production of vitamin B3 and the presence of the precursor of GABA, as well as the transport of zinc and other minerals in the brain.

Hemp flour also contains tryptophan, which is the precursor to serotonin, and tyrosine, the precursor to dopamine.

Therefore, it appears that the above properties are somewhat amplified by the combination with other types of flours and these effects were recorded after the above administration in individuals with various diseases.

In addition to the above effects on individuals with altered physiological conditions of various kinds, the products obtained with the preparation of the invention were also administered to healthy individuals who wanted to maintain their ideal weight.

In particular, for one year there were followed about 30 individuals, all healthy and without particular diseases, including 15 men and 15 women aged between 30 and 50 years, who were asked to replace their pasta dish provided by their menu with the same amount of pasta produced according to example 1 mentioned above - dry pasta, without changing in any way the amount by weight and their usual seasoning. An average intake of 70 g of pasta for lunch or dinner for a period of time of about 9 months was reported. At the end of the observation period, the following was observed:
- all men reported a decrease in abdominal circumference with substantial weight maintenance at the start of pasta intake;
- women reported greater feeling of satiety, mild spontaneous weight loss.
With the continuation of the pasta intake once a day, there was observed a substantial maintenance of weight.

In the light of the above, it is clear that all technical problems typical of food products based on flour of the prior art have been overcome while major advantages have been achieved at the same time.

First and foremost, there has been provided a mixture that enables to avoid blood sugar peaks, that are highly discouraged from a dietary point of view, especially in individuals with overweight problems, cardiovascular diseases and diabetes.

The mixtures resulting from the mixture of the invention are then highly processable, do not complicate the processing of the mixtures, resistance to cooking, packaging and the preservation according to the usual industrial production techniques currently used for processing, preserving, packaging and marketing similar products.

On the other hand, the properties of the known flours used were also synergistically optimised and enhanced by selecting specific ratios between the three components of the mixture.

Their unique processing also allows to maintain the properties of each flour.

Last but not least, the mixture significantly reduces the risk of developing intolerances, given that has a very low gluten content, for example, and therefore being suitable for producing foodstuffs for children.

Furthermore, it should also be observed that the plants from which the flours are obtained, as well as the processing of the flours, have a very low environmental impact given that they do not require frequent fertilisation, disinfestation or fungicidal treatments, and require low water consumption compared to the flours conventionally used in the food industry. In particular, chestnut flour also promotes the enhancement and income-generation capacity of forest areas with low human impact, promoting the maintenance of natural areas such as chestnut groves, and rural and mountain area economies that are normally less advantaged from an economic and social point of view.

## Claims

1. Food preparation for producing pasta and baked foods comprising as percentage of weight on the total dried weight of the preparation from 13% to 18% of chestnut flour, from 20% to 30% of hemp flour and from 48% to 72% of Senatore Cappelli durum wheat flour.

2. Food preparation according to claim 1, comprising from 14% to 17% of chestnut flour, from 22% to 28% of hemp flour and 55%-65% of Senatore Cappelli durum wheat flour.

3. Food preparation according to claim 1 or 2, comprising out of 100 grams of the total dry weight of the preparation 50-80 gr of carbohydrates, 6-10 gr of fibres and 12-19 gr of proteins.

4. Food preparation according to claim 1, 2 or 3, further comprising in solid or liquid form, substances selected from flavour enhancement agents, thickeners, stabilisers, leavening agents, salt, egg derivatives and proteins and/or milk derivatives and proteins.

5. Food dough comprising the preparation according to any one of claims 1 to 4.

6. Baked foodstuff and pasta produced with the food dough according to claim 5.

7. Baked foodstuff and pasta according to claim 6 selected from dried pasta, fresh pasta, bread, breadsticks, crackers, rusks, toast or sandwich bread, sponge cake, shortcrust pastry, muffins.

8. Method for maintaining the ideal weight of a healthy person, comprising the intake of 50 to 100 gr per day of pasta or baked food obtained with the dough according to claim 5, as replacement for pasta and conventional baked food products.
